# EUROPEAN PATENT SPECIFICATION

(11) **EP 3 932 161 B1**
(45) Date of publication and mention of the grant of the patent: **02.10.2024**
(21) Application number: 20763263.9
(22) Date of filing: 10.01.2020
(51) Int. Cl.: A01B 69/04

(54) **WORK VEHICLE**
NUTZFAHRZEUG
VÉHICULE DE TRAVAIL

(30) Priority: 28.02.2019 JP 2019036669
(43) Date of publication of application: 05.01.2022
(73) Proprietor: Yanmar Power Technology Co., Ltd., Osaka-shi Osaka 530-0013 (JP)
(72) Inventor: UEDA, Ryohei, Osaka-shi, Osaka 530-0014 (JP)
(74) Representative: Dennemeyer & Associates S.A.
(86) International application number: PCT/JP2020/000616
(87) International publication number: WO 2020/174894

(56) References cited:
- WO-A1-2017/169373
- WO-A1-2017/169373
- JP-A- 2013 074 815
- JP-A- 2018 093 793
- JP-A- 2018 093 861
- JP-A- 2018 093 861
- JP-A- H03 135 608
- US-A1- 2017 079 195

## Description

### TECHNICAL FIELD

The present invention relates to a work vehicle that executes notification when approaching a ridge-adjacent position in automatic travel.

### BACKGROUND ART

Conventionally, work vehicles such as rice transplanters that automatically travel straight forward in a field using a satellite positioning system are known. Such a work vehicle performs autonomous straightforward travel along a linear travel route that is set parallel to a reference route. The reference route is generated on the basis of a set of reference points called point A and point B. In general, the point A and the point B are set as the positions between ridge-adjacent positions in the field so that automatic travel can be performed extensively in the field

Also, as described in Patent Literatures 1 to 3, it is known that a work vehicle executes notification by a buzzer or the like just before the automatic travel is terminated. This allows an operator to be informed in advance that the work vehicle will reach the ridge-adjacent positions. Upon receiving the notification, the operator prepares himself/herself for stop or switches to manual travel.

In a deformed field that is not a simple rectangle, such a situation may occur that the notification is made even if the work vehicle is not approaching the ridge-adjacent position, or that the notification is not made even when the work vehicle is approaching the ridge-adjacent position. Therefore, in a deformed field, the ridge-adjacent position should be updated by erasing and re-setting the point A and the point B each time so that the notification during the automatic travel is made appropriately, which had nonconformity that a complicated operation was forced. Patent Literature 4 discloses a work vehicle capable of preventing a reference position for a rectilinear travel from being acquired due to an improper operation and curtailing increase of the quantity of components, Patent Literature 5 relates to a path generation device comprising a path generation unit and a control unit. Patent Literature 6 describes a work vehicle capable of preventing a reference position for a rectilinear travel from being acquired due to an improper operation and curtailing increase of the quantity of components, and Patent Literature 7 discloses a parallel operation work vehicle for enabling operation of an autonomous work vehicle by a long distance operating device installed in an accompanying work vehicle for performing work while accompanying the autonomous work vehicle.

### CITATION LIST

### Patent Literature

Patent Document 1: Japanese Unexamined Patent Application Publication No. 3-135608
Patent Document 2: Japanese Unexamined Patent Application Publication No. 2013-74815
Patent Literature 3: Japanese Unexamined Patent Application Publication No. 2004-337031
Patent Literature 4: JP 2018-093861 A
Patent Literature 5 : WO 2017/169373 (A1)
Patent Literature 6 : JP 2018-093793 (A)
Patent Literature 7 : US 2017/079195 (A1)

### DISCLOSURE OF INVENTION

### PROBLEMS TO BE SOLVED BY THE INVENTION

The present invention was made in consideration of the above problem, and its object is to provide a work vehicle capable of flexibly updating the ridge-adjacent position, and capable of appropriately executing notification during automatic travel even in a deformed field.

### MEANS FOR SOLVING THE PROBLEMS

A work vehicle according to the present invention is a work vehicle configured to be capable of automatic travel along a travel route that is set parallel to a reference route generated on the basis of a first reference point and a second reference point set in advance, while identifying an own vehicle position thereof using a satellite positioning system, including a control unit that activates a notification device if the own vehicle position approaches a first control reference position identified on the basis of the first reference point or a second control reference position identified on the basis of the second reference point when the automatic t ravel is being performed, the control unit is configured to be capable of changing one of the first control reference position and the second control reference position to a third control reference position identified on the basis of a third reference point which is different from the first reference point and the second reference point, and after the change, the notification device is activated on the basis of the third control reference position instead of one of the first control reference position and the second control reference position.

According to such a configuration, after setting the first reference point (one of the point A and the point B) and the second reference point (the other of the point A and the point B), the first control reference position or the second control reference position identified on the basis of them can be changed to the third control reference position after that. After the change, the activation of the notification device is controlled on the basis of the third control reference position instead of the first control reference position or the second control reference position. Therefore, it is possible to update the ridge-adjacent position flexibly, and to properly execute the notification during automatic travel even in a deformed field.

The control unit is preferably configured to be capable of changing one of the first control reference position and the second control reference position to the third control reference position, both when the automatic travel is being performed and when the automatic travel is not being performed. Since the control reference position can be changed when the automatic travel is being performed, the ridge-adjacent position can be updated without interrupting the work. In addition, since the control reference position can be changed when the automatic travel is not performed, it is possible, for example, to update the ridge-adjacent position after moving to the exact ridge-adjacent position by manual travel.

The control unit is preferably configured to change one of the first control reference position and the second control reference position, which is on a rear side of a working direction, to the third control reference position, when the third reference point is set in a work area defined on the basis of the first reference point and the second reference point while the automatic travel is being performed. According to such a configuration, it is not necessary to select which control reference position is to be changed, and it is possible to update the ridge-adjacent position in accordance with an intention of the operator in the work area.

The control unit is preferably configured to identify the working direction when automatic travel is started and to change one of the first control reference position and the second control reference position, which is on the rear side of the working direction, to the third control reference position when the third reference point is set in the work area defined on the basis of the first reference point and the second reference point while automatic travel is not being performed. According to such a configuration, the control reference position is appropriately changed even when the automatic travel is not being performed. Moreover, there is no need to select which control reference position is to be changed, and the ridge-adjacent position can be updated in accordance with the user's intention.

The control unit is preferably configured to change one of the first control reference position and the second control reference position, which is closer to the own vehicle position, to the third control reference position when the third reference point is set outside the work area defined on the basis of the first reference point and the second reference point. According to such a configuration, it is not necessary to select which control reference position is to be changed, and it is possible to update the ridge-adjacent position outside the work area in accordance with the intention of the operator.

### BRIEF DESCRIPTION OF DRAWINGS

[FIG. 1] A left side view of a rice transplanter, which is an example of a work vehicle according to the present invention.
[FIG. 2] A perspective view of a driving operation unit seen from the left front.
[FIG. 3] A view of an operation surface of an operation member.
[FIG. 4] A block diagram showing main configurations related to automatic travel.
[FIG. 5] A schematic diagram of an example of a travel route in automatic travel in a field.
[FIG. 6] A schematic diagram of an example of the travel route in the automatic travel in a deformed field.
[FIG. 7] Schematic diagrams of update patterns of a ridge-adjacent position.
[FIG. 8] A table showing a relationship between an operation modes and operations of an A button and a B button.
[FIG. 9] A flowchart showing a process of a control unit regarding the automatic travel.
[FIG. 10] A flowchart showing a work condition setting process.
[FIG. 11] A flowchart showing an automatic travel execution process.
[FIG. 12] A flowchart showing a process of ending / continuing automatic travel.

### DESCRIPTION OF EMBODIMENTS

An embodiment of the present invention will be described with reference to the drawings. This embodiment shows an example of an automatic travel system that causes a passenger-type rice transplanter to perform automatic travel, an example of a work vehicle, while identifying a vehicle position using a satellite positioning system. The work vehicle is not limited to a rice transplanter, but may be, for example, a tractor, a combine harvester, a seedling transplanter, or any other agricultural work vehicle. Alternatively, it may be a civil engineering and construction vehicle or a snowplow.

### [Overall structure of the rice transplanter]

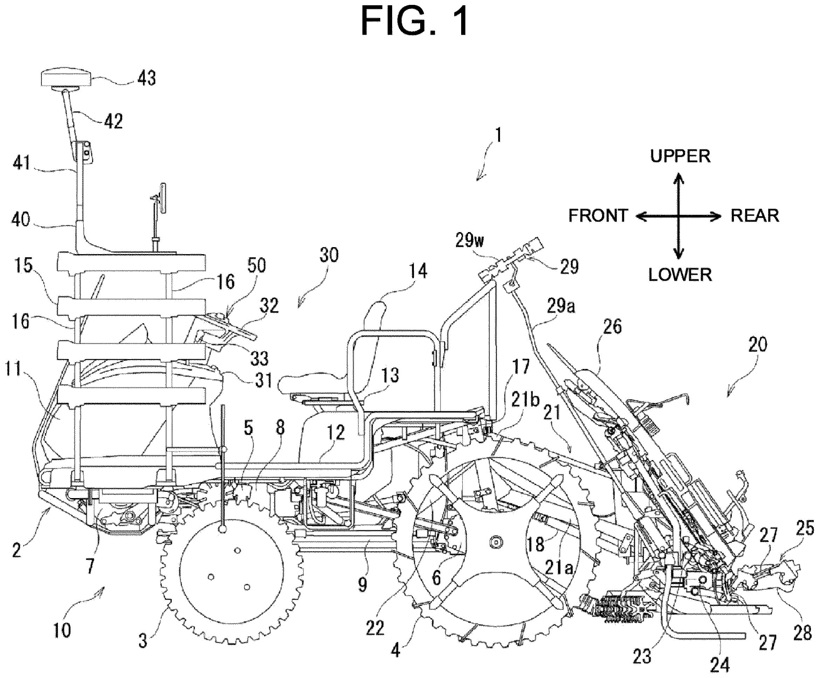

First, the overall structure of the rice transplanter will be briefly explained. In FIG. 1, a front-rear direction and an up-and-down direction of the rice transplanter 1 are indicated by arrows, and the direction perpendicular to the paper surface is a left-right direction. The rice transplanter 1 has a traveling unit 10 and a planting unit 20 as a working portion. The planting unit 20 is disposed behind the traveling unit 10. The planting unit 20 is connected to a rear part of the traveling unit 10, capable of elevation via an elevating mechanism 21. The rice transplanter 1 is configured to perform a seedling planting (rice planting) operation in which seedlings are planted by the planting unit 20 while traveling in a field by the traveling unit 10.

The traveling unit 10 has a traveling machine body 2, a pair of left and right front wheels 3 supporting the traveling machine body 2, and also a pair of left and right rear wheels 4. The front wheels 3 are mounted on front axles extending from a front axle case 5 to both right and left sides. The front axle case 5 is provided on the side of a transmission case 8 and is supported at a front part of the traveling machine body 2. The rear wheels 4 are mounted on rear axles extending from a rear axle case 6 to both right and left sides. The rear axle case 6 is provided at a rear end of a tubular frame 9 projecting rearwardly from the transmission case 8 and is supported at the rear part of the traveling machine body 2.

An engine 7, which is a drive source, is mounted at the front part of the traveling machine body 2. The engine 7 is covered by a bonnet 11. The power of the engine 7 is transmitted to a transmission case 8 disposed behind the engine 7, and is transmitted to the front wheels 3 and the rear wheels 4 through the transmission case 8. By transmitting power to the front wheels 3 and the rear wheels 4 to rotate / drive them, the traveling unit 10 can travel in the front-rear direction.

A link frame 17 is provided upright at the rear end of the traveling machine body 2. The planting unit 20 is connected to the link frame 17, capable of elevation, via the elevating mechanism 21. The elevating mechanism 21 has a lower link 21a and a top link 21b. A rod end of a hydraulic elevating cylinder 22 is connected to the lower link 21a. A cylinder base end of the elevating cylinder 22 is supported vertically rotatably at the rear part of the upper surface of the tubular frame 9. It is configured such that, by extending / retracting the elevating cylinder 22, the elevating mechanism 21 is rotated in the vertical direction, and the planting unit 20 is elevated up and down.

The planting unit 20 includes a planting input case 23 to which power is transmitted from the engine 7 via the transmission case 8 and a PTO shaft (power transmission shaft) 18, a plurality of planting transmission cases 24 connected to the planting input case 23, a seedling planting mechanism 25 provided at the rear end side of each planting transmission case 24, and a seedling loading table 26 on which seedling mats are placed. Reserve seedlings to be supplied to the planting unit 20 for seedling refill (seedling replenishment) are placed on reserve seedling stands 15 disposed on both left and right sides of the bonnet 11. The reserve seedling stand 15 is supported on a support frame 16 (reserve seedling support) provided upright on both the left and right sides of the front part of the traveling machine body 2.

The seedling planting mechanism 25 includes a rotary case 28 having two planting claws 27, 27 for one row. In accordance with a rotating movement of the rotary case 28, the two planting claws 27, 27 take out seedlings from the seedling mat alternately and plant them in the field. Since the rice transplanter 1 of this embodiment is an eight-row planting rice transplanter, it includes four sets of planting transmission cases 24 for eight-row planting (two rows forming one set), and the seedling loading table 26 is also configured for eight-row planting However, the rice transplanter 1 is not limited thereto, and may be, for example, a six-row or ten-row rice transplanter.

Side markers 29 are provided on the left and right outer sides of the planting unit 20, respectively. The side marker 29 has a marker wheel body 29w for drawing lines and a marker arm 29a that rotatably supports the marker wheel body 29w. A base end of the marker arm 29a is supported at the left and right outer sides of the planting unit 20 rotatably in the left and right directions. The side marker 29 is configured to be displaceable between a landing posture, in which the marker wheel body 29w is lowered to form a reference trajectory on the rice field for the next process, and a non-landing posture (see FIG. 1), in which the marker wheel body 29w is raised to move away from the rice field.

At the center of the traveling machine body 2 in the front-rear direction, a driving operation unit 30 is provided. The operator boards a work step 12 (body cover) provided on the upper surface side of the traveling machine body 2 and operates the rice transplanter 1 at the driving operation unit 30. An operation panel 31 is provided at the front part of the driving operation unit 30. The operation panel 31 is disposed on the rear upper surface side of the bonnet 11. Aplurality of operating tools, including a steering wheel 32 and a main gearshift lever 33, are disposed on the operation panel 31. A driver's seat 14 is disposed behind the operation panel 31 via a seat frame 13.

On both the left and right sides of the bonnet 11, a plurality of (four in this embodiment) reserve seedling stands 15 are supported by a pair of support frames 16, 16 spaced apart in the front-rear direction. A connecting frame 40 having a substantial L-shape on a side view is connected to upper ends of the pair of support frames 16, 16. A unit frame 42 is connected to an upper end of the connecting frame 40 via an intermediate frame 41 extending in the up-and-down direction. The unit frame 42 is connected rotatably to the upper parts of the left and right intermediate frames 41. A positioning unit 43 as a positioning unit is fixed to the unit frame 42.

The positioning unit 43 receives positioning signals from a satellite positioning system (GNSS) and identifies the vehicle's position on the basis of the positioning signals. For example, DGPS (Differential GPS) is used as the satellite positioning system. According to this, position information of the rice transplanter 1 (mobile station) is corrected by correction information from a base station installed at a predetermined point, and the own vehicle position of the rice transplanter 1 can be identified with high accuracy. Not limited to DGPS, satellite positioning systems such as RTK (Real Time Kinematic) and SBAS (Geostationary Satellite Augmentation System) can also be used.

### [Driving operation unit]

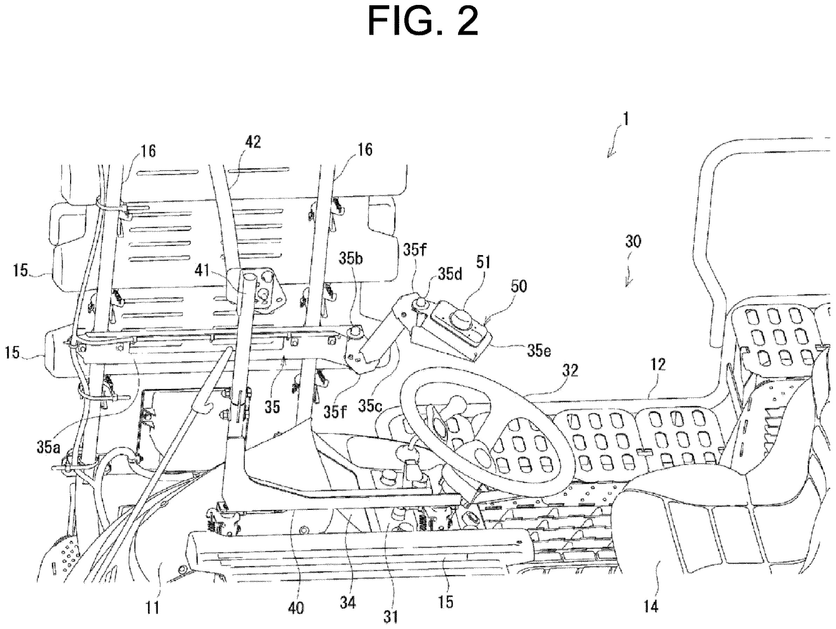

Next, the driving operation unit 30 will be described. As shown in FIG. 2, various operating tools including the steering wheel 32 and a display device 34 are disposed on the operation panel 31. The steering wheel 32 is provided in front of the driver's seat 14. A gearshift pedal and a brake pedal, not shown, are installed below the operation panel 31. The gearshift pedal is an operating tool for changing a vehicle speed of the rice transplanter 1. The brake pedal is an operating tool for braking the rice transplanter 1. Generally, the gearshift pedal is disposed at lower right of the operation panel 31, and the brake pedal is disposed on the left of the gearshift pedal.

The rice transplanter 1 includes an operation member 50 for performing operations related to automatic travel and an arm member 35 supporting the operation member 50. The arm member 35 has a stay-like upper arm 35a fixed to the support frames 16, 16, a forearm 35c which rotates horizontally with respect to the upper arm 35a with a hinge 35b as a fulcrum, and a holder 35e which rotates horizontally with respect to the forearm 35c with a hinge 35d as a fulcrum. The operation member 50 is attached to the holder 35e. At both ends of the forearm 35c, elbow portions 35f, 35f which are bent along the up-and-down direction are formed, respectively. The elbow portion 35f may be configured to be rotatable in the up-and-down direction via a hinge. The operation member 50 held in the holder 35e can be moved in a movable range of the arm member 35.

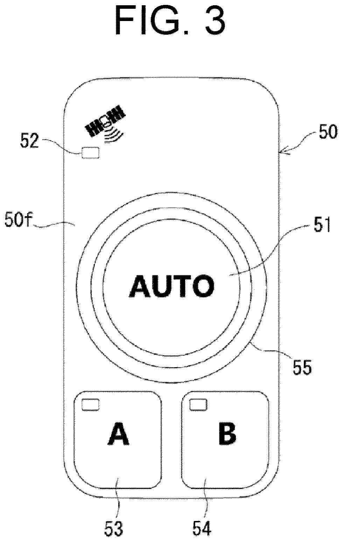

As shown in FIG. 3, the operation member 50 includes an AUTO button 51, which is an indicator for instructing start of automatic travel, an A button 53, which is an indicator for instructing setting of the point A, which is a start point of a reference route, and a B button 54, which is an indicator for instructing the setting of the point B, which is an end point of the reference route. The AUTO button 51 is disposed at the center of an operation surface 50f of the operation member 50. The A button 53 and the B button 54 are disposed side by side on the left and right below the AUTO button 51. An indicator lamp 52 indicating a positioning state of the positioning unit 43 is disposed at upper left of the AUTO button 51.

The AUTO button 51 is operated when starting and stopping automatic travel. Since the AUTO button 51 is operated more frequently than the A button 53 and the B button 54, it is formed larger on a front view than the A button 53 and the B button 54 so that it can be easily pressed and operated. In addition, the AUTO button 51 protrudes larger than the A button 53 and the B button 54. The A button 53 and the B button 54 are the buttons having the same shape and are disposed symmetrically. A ring-shaped light-emitting portion 55 is provided around the AUTO button 51. The light emitting portion 55 has a function of informing the operator of various states related to automatic travel by its light color and lighting pattern.

In the present embodiment, the operation member 50 for performing operations related to automatic travel is provided independently of the operation panel 31. According to such a configuration, there is no need to modify the operation panel 31 when an automatic travel system is additionally installed in an existing rice transplanter, which is convenient. However, it is not limited thereto, and it is also possible to incorporate and provide an operation member for performing operations related to automatic travel in the operation panel 31.

### [Major configurations of automatic travel]

The rice transplanter 1 is configured to be capable of performing automatic travel along a travel route that is set parallel to a reference route generated on the basis of a preset first reference point (one of the point A and the point B) and a second reference point (the other of points A and B) while identifying an own vehicle position thereof using a satellite positioning system. For straight-travel assistance work by automatic travel, operations of setting a start point of a reference route, called point A, setting an end point of the reference route, called point B, and turning on (start) / off (stop) the automatic travel via the operation member 50 are needed.

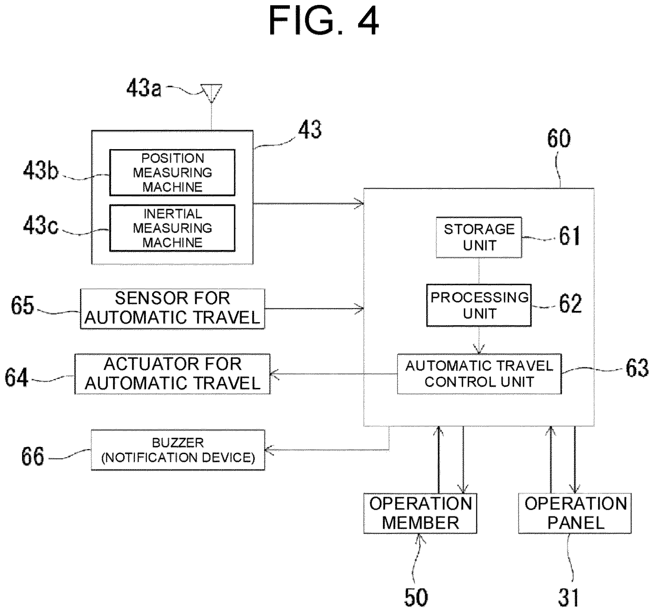

FIG. 4 is a block diagram illustrating the major configurations related to the automatic travel. The positioning unit 43 includes a positioning antenna 43a, a position measuring machine 43b, and an inertial measurement unit (IMU) 43c. The positioning antenna 43a receives signals from positioning satellites (GPS satellites, for example) that constitute a satellite positioning system. The positioning signal received by the positioning antenna 43a is input to the position measuring machine 43b. The position measuring machine 43b measures the position of the own vehicle by signal processing of the input positioning signal. The inertial measuring machine 43c identifies the posture (roll angle, pitch angle, and yaw angle) of the traveling machine body 2.

The rice transplanter 1 includes a control unit 60 for controlling the operation of the traveling machine body 2 (forward movement, backward movement, stopping and turning and the like) and the operation of the planting unit 20, which is a work unit (elevating up and down, driving and stopping and the like.). The control unit 60 is constituted by including a CPU, ROM, RAM, I/O, and the like, not shown. The CPU can read various programs and the like from the ROM and execute them. Operation programs, application programs, and various data are stored in the ROM. By collaborating such hardware and software, the control unit 60 can be operated as a storage unit 61, a processing unit 62, an automatic travel control unit 63, and the like.

The storage unit 61 stores various kinds of information required for automatic travel of the rice transplanter 1. Such information includes, for example, a horizontal distance from the positioning antenna 43a to the seedling planting mechanism 25, the positions of the first and second reference points set by the operator, and the position of the third reference point described below. The processing unit 62 executes various processes required for automatic travel of the rice transplanter 1. Such processes include generation of the reference route and change of the control reference route described below (update of a ridge-adjacent position). The automatic travel control unit 63 executes control related to automatic travel.

The automatic travel control unit 63 controls an actuator 64 for automatic travel so that the rice transplanter 1 travels along a travel route on the basis of the information of the own vehicle position measured by the positioning unit 43. The actuator 64 for automatic travel refers to various actuators to be activated during automatic travel, including an actuator for steering the steering handle 32, an actuator for shifting the transmission of the transmission case 8, an actuator for elevating the planting unit 20 up and down (the elevating cylinder 22), and the like. The automatic travel control unit 63 controls the operation of the rice transplanter 1 on the basis of the signals from a sensor 65 for automatic travel provided in the rice transplanter 1.

The rice transplanter 1 includes a buzzer 66 as a notification device. The buzzer 66 emits a warning sound (buzzer sound) in response to the control by the control unit 60. The buzzer 66 may be included in the operation member 50. It is also possible to configure a notification device using a lamp that gives notification using light, or a combination of a buzzer and a lamp, for example, not limited to a buzzer that gives notification using sound.

### [Automatic travel in the field]

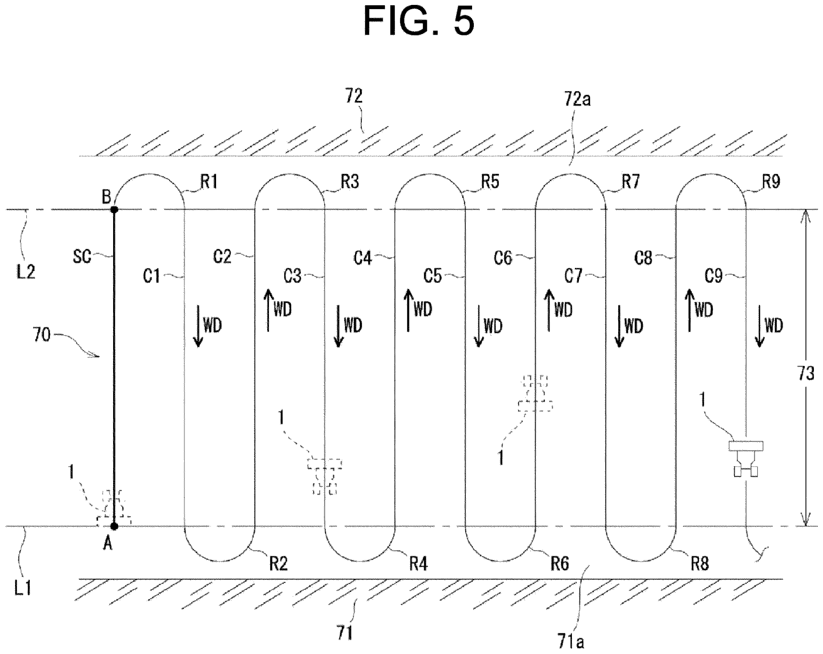

Afield 70 shown in FIG. 5 is divided by a pair of ridges 71, 72 extending in parallel with each other. First, the operator causes the rice transplanter 1 to travel from a ridge adjacent 71a close to one ridge 71 toward a ridge adjacent 72a close to the other ridge 72 in order to generate a reference route SC. At that time, the A button 53 is operated at the start point A to set the point A. Also, the B button 54 is operated at the end point B to set the point B. In this embodiment, it is described that the point A corresponds to the first reference point and the point B corresponds to the second reference point, but these may be vice versa.

The control unit 60 generates the reference route SC on the basis of the point A and the point B set in advance, and defines a work area 73 on the basis of the points A and B thereof. The reference route SC can be identified as a line segment connecting the point A and the point B. The work area 73 can be identified as the area sandwiched between a ridge-adjacent position L1, which is acquired as a line segment perpendicular to the reference route SC with respect to the point A, and a ridge-adjacent position L2, which is acquired as a line segment perpendicular to the reference route SC with respect to the point B. The lengths of the line segments that constitute the ridge-adjacent positions L1 and L2 are set at predetermined distances (1 km on each side, for example) with the points A and B at the centers, respectively.

After generating the reference route SC, when the AUTO button 51 is pressed, a travel route C1 passing through the own vehicle position and in parallel to the reference route SC is set, and the working direction WD (traveling direction during automatic travel) is identified on the basis of the direction (azimuth) of the vehicle body, and the automatic travel is started. The working direction WD is parallel to the reference route SC and can be either downward or upward in FIG. 5. The working direction WD is switched at each turn, but is not limited to this. The system is configured such that, when the direction of the vehicle body (front-rear direction) is inclined with respect to the reference route SC, the automatic travel is not started unless the inclination angle is not more than a predetermined value (not more than 15 degrees, for example).

Thereafter, the travel routes C2, C3... are set in the same manner, and autonomous straight travel is performed along them. Once set, the points A and B are continuously used until they are erased or reset, so that the plurality of travel routes C1, C2... are parallel to each other. In an arc-shaped turning routes R1, R2, ... which connect the ends of the travel routes C1, C2, ... to each other, a U-turn travel (180-degree turn of direction) is performed by the operator's operation. However, it is not limited thereto and may be configured such that the autonomous U-turn travel can be performed.

The ridge-adjacent position L1 corresponds to the first control reference position identified on the basis of the first reference point, which is the point A, and the ridge-adjacent position L2 corresponds to the second control reference position identified on the basis of the second reference point, which is the point B. The control unit 60 activates the buzzer 66 when the position of the own vehicle approaches the ridge-adjacent position L1 or the ridge-adjacent position L2 when the automatic travel is being performed. The control unit 60 causes the buzzer 66 to sound and give notification when the rice transplanter 1 approaches a predetermined distance (8 m, for example) with respect to the ridge-adjacent position L1 or the ridge-adjacent position L2, for example. If the gearshift pedal is pressed even when the ridge-adjacent positions L1, L2 are reached, the automatic travel is continued. While the function of traveling at a constant speed without stepping on the gearshift pedal is active, it is desirable to control to stop the rice transplanter 1 or to stop the engine 7 when the rice transplanter 1 reaches the ridge-adjacent positions L1, L2.

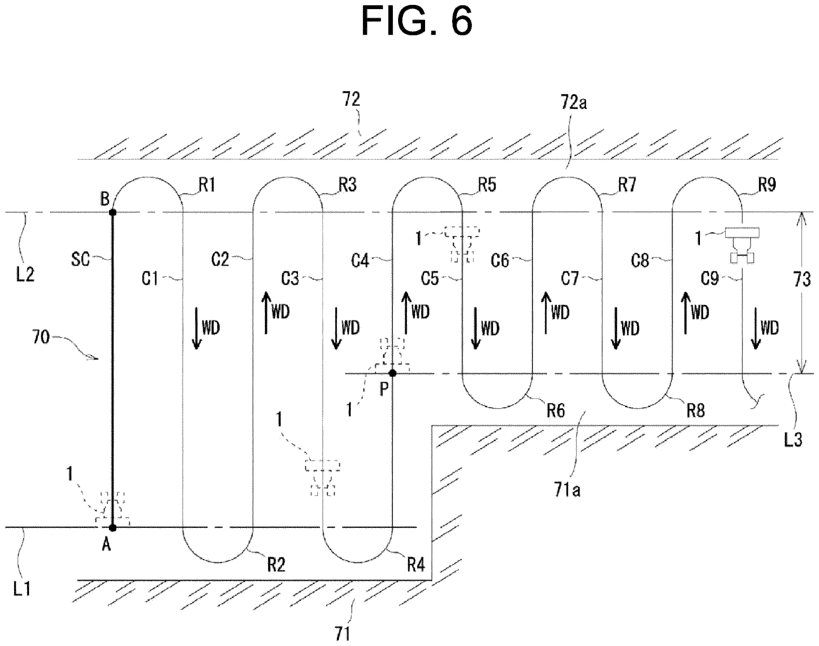

FIG. 6 shows an example in which the field 70 is a deformed field. In FIG. 6, the ridge 71 is bent so as to narrow the field 70, and accordingly the ridge adjacent 71a has a step. Since the ridge-adjacent position L1 is identified on the basis of the point A set in advance, and the activation of the buzzer 66 is controlled on the basis of the ridge-adjacent position L1 and the ridge-adjacent position L2, the buzzer 66 is not activated even if the rice transplanter 1 reaches the ridge adjacent 71a in the case of the automatic travel along the travel route C5. In addition, there are deformed fields where the ridge adjacent has steps or the ridge adjacent is curved in a direction opposite to that in FIG. 6, and depending on the shape thereof, the buzzer may be activated even when the rice transplanter is not approaching the ridge adjacent.

In the past, in order to ensure that the notification is properly executed, the points A and B must be erased once after traveling on the travel route C4, and the points A and B must be reset while traveling manually on the travel route C5 so as to update the ridge-adjacent position. However, such a complicated operation is inconvenient for the operator. In addition, whether or not the parallelism of the travel route is properly maintained before and after the update of the ridge-adjacent positions tends to depend on the skill of the operator. If the operator is an unskilled person, there is a risk that the travel routes C5 to C7 may be set with inclination to the travel routes C1 to C4.

Therefore, with this rice transplanter 1, the control unit 60 is configured to be capable of changing one of the ridge-adjacent position L1 and the ridge-adjacent position L2 to the third control reference position identified on the basis of the third reference point (point P) different from the first reference point (point A) and the second reference point (point B), and after the change, the buzzer 66 is activated on the basis of the third control reference position instead of one of the ridge-adjacent position L1 and the ridge-adjacent position L2. In addition, the control unit 60 is configured to be capable of changing one of the ridge-adjacent position L1 and the ridge-adjacent position L2 to the third control reference position either when the automatic travel is being performed or when the automatic travel is not being performed.

In FIG. 6, the ridge-adjacent position L1 is updated to a ridge-adjacent position L3. The updated ridge-adjacent position L3 is acquired as a line segment perpendicular to the reference route SC with a set point P as the reference. The point P corresponds to the third reference point. The ridge-adjacent position L3 corresponds to the third control reference position identified on the basis of the third reference point. The point P is set in response to a predetermined operation by the operator, and the control reference position is changed accordingly, that is, the ridge-adjacent position is updated Before the change, the activation of the buzzer 66 is controlled on the basis of the ridge-adjacent position L1 and the ridge-adjacent position L2, and after the change, the activation of the buzzer 66 is controlled on the basis of the ridge-adjacent position L3 and the ridge-adjacent position L2. For this reason, the buzzer 66 is appropriately activated when the position of the own vehicle approaches the ridge adjacent 71a in the automatic travel on and after the travel route C5. After the update, the work area 73 is defined on the basis of the point P and the point B.

The control unit 60 is configured to change one of the first control reference position and the second control reference position, which is on the rear side of the working direction WD, to the third control reference position when the third reference point is set in the work area 73 when the automatic travel is being performed. In other words, the control unit 60 is configured such that, while the automatic travel is being performed along the working direction WD with either of the first control reference position and the second control reference position as the starting point, when the third reference point is set in the work area 73, the control unit 60 changes either of the first control reference position and the second control reference position, which is the starting point, to the third control reference position. Since the control reference position can be changed during the automatic travel, the ridge-adjacent position can be updated without interrupting the work.

Accordingly, as shown in FIG. 6, when the point P, which is the third reference point, is set in the work area 73 during the automatic travel along the travel route C4, the ridge-adjacent position L1 on the rear side of the working direction WD in the pair of ridge-adjacent positions L1 and L2 is changed to the ridge-adjacent position L3. In other words, the ridge-adjacent position L1 that was the starting point of the travel route C4 in the pair of ridge-adjacent positions L1 and L2 is changed to the ridge-adjacent position L3. This eliminates the need for the operator to select which control reference position to change, that is, the ridge-adjacent position L1 or the ridge-adjacent position L2. Such update patterns are easy to understand sensually, and the update of the ridge-adjacent position in accordance with the intention of the operator is possible.

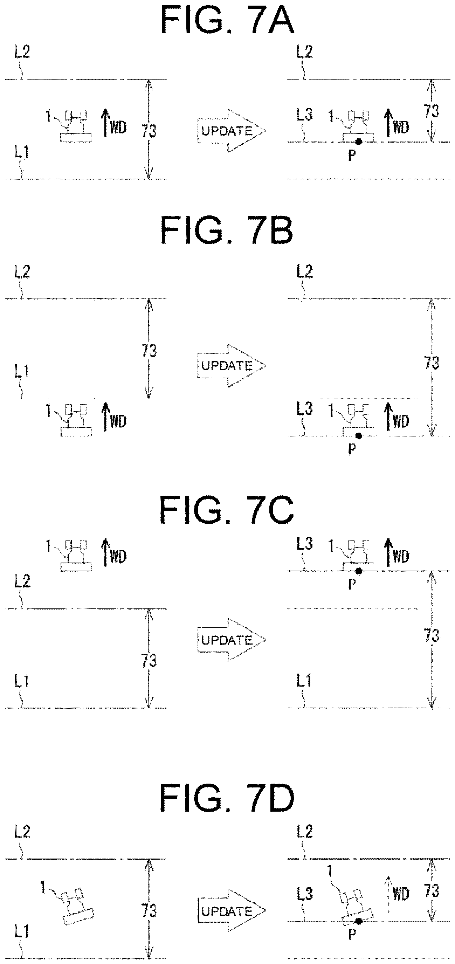

There are two possible situations when the third reference point is to be set, or in other words, when the ridge-adjacent position is to be updated, that is, when the rice transplanter 1 is inside the work area 73 (case 1), and when the rice transplanter 1 is outside the work area 73. Furthermore, the latter may include a case in which the work area 73 is on the front side of the rice transplanter 1 (case 2) and a case in which the work area 73 is on the rear side of the rice transplanter 1 (case 3). FIGS. 7(A) to 7(C) schematically show the update patterns of the ridge-adjacent positions in the cases 1 to 3, respectively. Since the case 1 has already been described, the explanation of FIG. 7(A) is omitted.

The control unit 60 is configured to change one of the first control reference position and the second control reference position, which is closer to the own vehicle position, to the third control reference position when the third reference point is set outside the work area 73. Accordingly, when the point P is set outside the work area 73 as shown in FIG. 7(B), the ridge-adjacent position L1 closer to the own vehicle position in the pair of ridge-adjacent positions L1 and L2 is changed to the ridge-adjacent position L3, and thereafter the activation of the buzzer 66 is controlled on the basis of the ridge-adjacent position L3 and the ridge-adjacent position L2. Similarly, when the point P is set outside the work area 73 as shown in FIG. 7(C), the ridge-adjacent position L2 closer to the own vehicle position in the pair of ridge-adjacent positions L1 and L2 is changed to the ridge-adjacent position L3, and thereafter the activation of the buzzer 66 is controlled on the basis of the ridge-adjacent position L3 and the ridge-adjacent position L1.

In other words, it is configured such that, when the point P is set closer to the rear side of the working direction WD than the work area 73 as shown in FIG. 7(B), the control unit 60 changes one of the pair of ridge-adjacent positions L1 and L2, which is on the rear side of the working direction WD (ridge-adjacent position L1), to the ridge-adjacent position L3, and when the point P is set closer to the front side of the working direction WD than the work area 73 as shown in FIG. 7(C), one of the pair of the ridge-adjacent positions L1 and L2, which is on the front side of the working direction WD (ridge-adjacent position L2), is changed to the ridge-adjacent position L3. These may be done either when the automatic travel is being performed or when it is not. When automatic travel is not being performed, the working direction when the automatic travel is started only needs to be the reference in the same way as when the third reference point is set in the work area 73 described below.

FIG. 7(D) is different from FIG. 7(A) in that the point P is set when automatic travel is not performed. It is configured such that, when the point P is set in the work area 73 when the automatic travel is not being performed, the control unit 60 identifies the working direction WD in the case where the automatic travel is started, and changes one of the ridge-adjacent position L1 and the ridge-adjacent position L2, which is on the rear side of the working direction WD (the ridge-adjacent position L1), to the ridge-adjacent position L3. The working direction WD when the automatic travel is started is the working direction when the automatic travel is assumed to have been started. Although the working direction is not determined when the automatic travel is not being performed, such as during stop and during manual travel, the ridge-adjacent position can be updated without hindrance by using the working direction WD when the automatic travel is started as a reference.

As previously described, the updated ridge-adjacent position L3 is defined as a line segment perpendicular to the reference route SC with respect to the point P set after that. Not limited to this, the ridge-adjacent position L3 can be also identified as a line segment parallel to at least one of the ridge-adjacent position L1 and the ridge-adjacent position L2 when using the point P as a reference, for example. If the rice transplanter 1 has a function that can adjust the angle of the ridge-adjacent position L1 or the ridge-adjacent position L2, there may be a situation in which the pair of ridge-adjacent positions L1 and L2 are not parallel to each other but in such a case, the ridge-adjacent position L3 can be identified as a line segment parallel to the ridge-adjacent position to be updated.

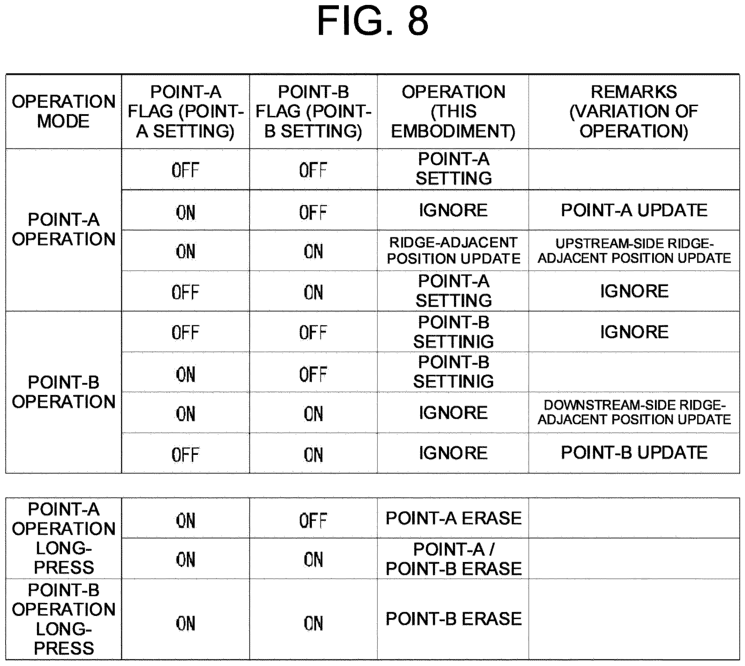

The operator can set a third reference point, that is, the point P, by a predetermined operation both when the automatic travel is being performed and when the automatic travel is not being performed. From the viewpoint of simplification of the operation, it is preferable that the setting of the third reference point can be indicated using an indicator for indicating the setting of the first reference point and/or the second reference point. In this embodiment, the A button 53 can be used to indicate the setting of the point P. When the A button 53 is pressed in a situation where the points A and B are set, the position of the own vehicle at that time is set as the point P. FIG. 8 is a table showing the relationship between the operation modes of the A button 53 as well las the B button 54 and the operation. Various variations of these operations are possible, as shown in the remarks column of the table.

As shown in FIG. 8, in this embodiment, the ridge-adjacent position is updated by the point-A operation (pressing operation of the A button 53). Since the processing is executed in accordance with the update pattern shown in FIGs. 7, it is not necessary to select which of the ridge-adjacent positions L1 and L2 is to be updated. Instead of the point-A operation, the point-B operation (press operation of the B button 54) may be used. Alternatively, both the A button 53 and the B button 54 can be used. For example, the ridge-adjacent position on the rear side of the working direction (upstream side of the traveling direction) may be updated by the point-A operation in the work area 73, and the ridge-adjacent position on the front side of the working direction (downstream side of the traveling direction) may be updated by the point-B operation as well (see the remarks column in FIG. 8). According to such a configuration, the system can be updated at both the ridge-adjacent positions L1 and L2 regardless of the direction of the vehicle body.

### [Processing of control unit for automatic travel]

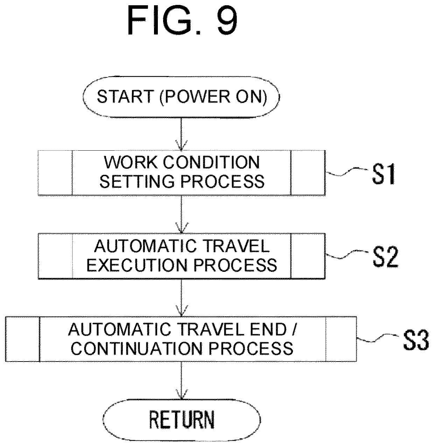

FIGS. 9 to 12 are flowcharts showing processes executed by the control unit 60 regarding automatic travel of the rice transplanter 1. As shown in FIG. 9, when the rice transplanter 1 is turned on, it is "START", and first, the conditions for performing straight-travel assistance work by automatic travel are set (work condition setting process S1). Next, the automatic travel is executed on the basis of the set conditions (automatic travel execution process S2). Thereafter, if a predetermined end condition is satisfied, the automatic travel is terminated, otherwise the automatic travel is continued (automatic travel end /continuation process S3), and these processes S1 to S3 are repeated.

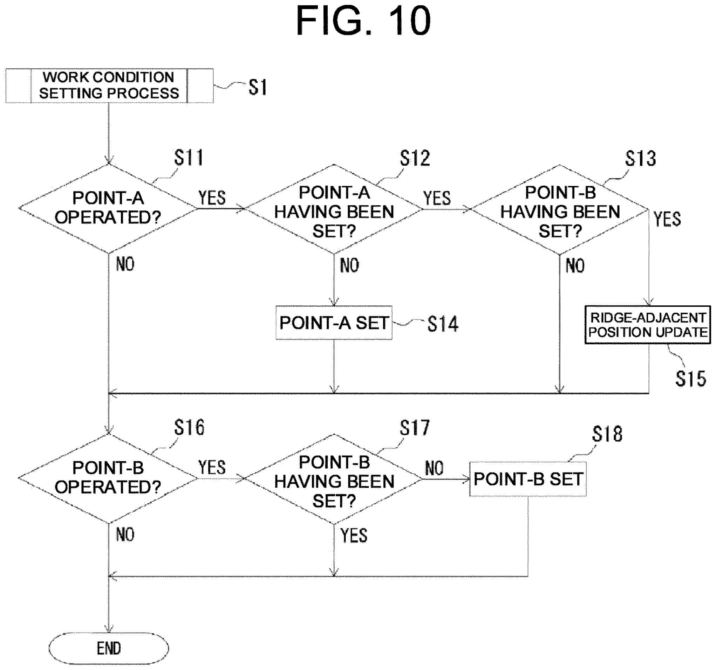

As shown in FIG. 10, in the work condition setting process S1, when the point-A operation is performed, if the point A has not yet been set, the point A is set in response to the operation (steps S11, S12 and S14). If the both point A and point B are set when the point-A operation is performed, the ridge-adjacent positions are updated in accordance with the operation (steps S11 to S13 and S15). This means that the third reference point (point P) is set in response to the point-A operation, thereby changing the control reference position. If the point-B operation is performed and the point B has not yet been set, the point B is set in response to the operation (steps S16-18).

Although not shown in FIG. 10, the set points A and B can be erased by long-pressing the A button 53 and the B button 54. Specifically, as shown in FIG. 8, if the A button 53 is long-pressed in a situation where only the point A is set, the set point A is erased. In addition, if the A button 53 is long-pressed in a situation where both the points A and B have been set, both the set points A and B are erased. If the B button 54 is long-pressed in a situation where both the points A and B have been set, the set point B is erased. As another operation mode, it may be configured such that the points A and B are erased by simultaneously pressing the A button 53 and the B button 54.

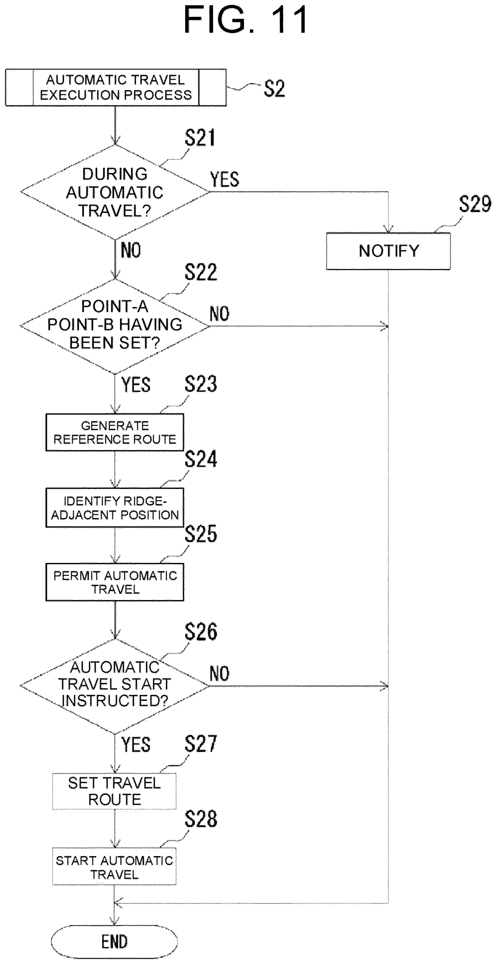

As shown in FIG. 11, in the automatic travel execution process S2, when automatic travel is not being performed and the points A and B have already been set, the reference route SC is generated on the basis of the set points A and B, and the ridge-adjacent positions L1 and L2 are identified (steps S21 to S24). If the positioning state of the positioning unit 43 is good, automatic travel is permitted by the control unit 60 (step S25). When start of automatic travel is instructed by the ON operation of the AUTO button 51, a travel route is set and automatic travel is started along the travel route (steps S26 to S28). On the other hand, if the automatic travel is in progress at step S21, the buzzer 66 is activated to execute notification based on the ridge-adjacent position that has been identified (step S29).

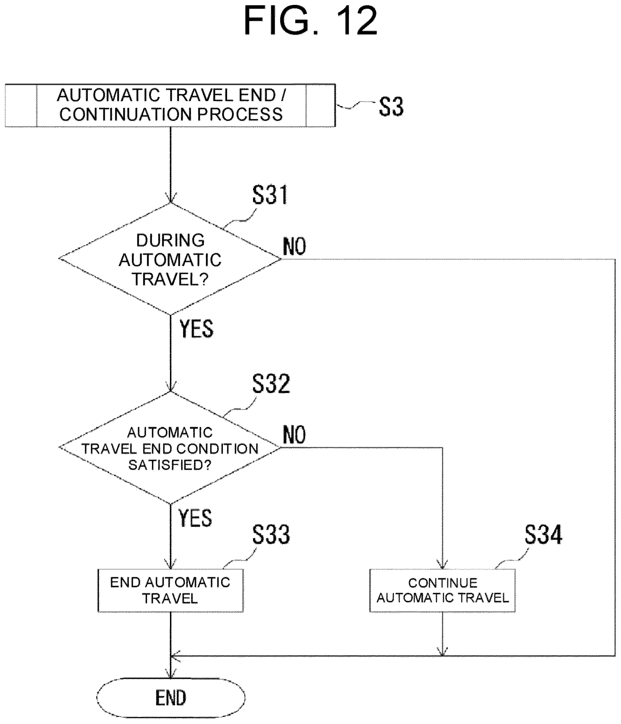

As shown in FIG. 12, in the automatic travel end / continuation process S3, it is determined whether or not a predetermined end condition is satisfied during the automatic travel (steps S31 and S32). The end condition of the automatic travel is satisfied, for example, when the end of the automatic travel is instructed by the OFF operation of the AUTO button 51, or when it is determined that the positioning state of the positioning unit 43 is not satisfactory to such an extent that the automatic travel cannot be continued. If the end condition is satisfied, the automatic travel is terminated; otherwise, the automatic travel is continued (steps S32 to S34).

The present invention is not limited to the above-described embodiment in any way, and various improvements and changes can be made within the scope of the subject-matter of the appended claims.

### DESCRIPTION OF REFERENCE NUMERALS

1 Rice transplanter (an example of work vehicle)
51 AUTO button
53 A button
54 B button
60 Control unit
66 Buzzer (an example of a notification device)
73 Work area
L1 Ridge-adjacent position (first control reference position)
L2 Ridge-adjacent position (second control reference position)
L3 Ridge-adjacent (third control reference position)
SC Reference route

## Claims

1. A work vehicle (1) capable of automatic travel along a travel route that is set parallel to a reference route generated on the basis of a first reference point and a second reference point set in advance, while identifying an own vehicle position thereof using a satellite positioning system, comprising:
a control unit (60) that is configured to activate a notification device, if the own vehicle position approaches a first control reference position identified on the basis of the first reference point (A) or a second control reference position identified on the basis of the second reference point (B) when the automatic travel is being performed, **characterized in that**
the control unit (60) is configured to change one of the first control reference position and the second control reference position to a third control reference position identified on the basis of a third reference point which is different from the first reference point (A) and the second reference point (B), and
after the change, the notification device is activated on the basis of the third control reference position instead of one of the first control reference position and the second control reference position.

2. The work vehicle (1) according to claim 1, wherein the control unit (60) is capable of changing one of the first control reference position and the second control reference position to the third control reference position, both when the automatic travel is being performed and when the automatic travel is not being performed.

3. The work vehicle (1) according to claim 1 or 2, wherein the control unit (60) is configured to change one of the first control reference position and the second control reference position, which is on a rear side of a working direction, to the third control reference position when the third reference point is set in a work area (73) defined on the basis of the first reference point (A) and the second reference point (B) while the automatic travel is being performed.

4. The work vehicle (1) according to any one of claims 1 to 3, wherein the control unit (60) is configured to identify a working direction when the automatic travel is started and changes one of the first control reference position and the second control reference position, which is on a rear side of the working direction, to the third control reference position when the third reference point is set in a work area defined on the basis of the first reference point (A) and the second reference point (B) while the automatic travel is not being performed.

5. The work vehicle (1) according to any one of claims 1 to 4, wherein the control unit (60) is configured to change one of the first control reference position and the second control reference position, which is closer to the own vehicle position, to the third control reference position when the third reference point is set outside a work area (73) defined on the basis of the first reference point (A) and the second reference point (B).

## Patentansprüche

1. Arbeitsfahrzeug (1), das fähig ist, automatisch entlang einer Fahrstrecke zu fahren, die parallel festgelegt ist zu einer Referenzstrecke, die auf Basis eines vorher festgelegten ersten Referenzpunkts und zweiten Referenzpunkts erzeugt wird, während eine eigene Fahrzeugposition desselben unter Verwendung eines Satellitenpositionierungssystems identifiziert wird, umfassend:
eine Steuereinheit (60), die dazu konfiguriert ist, eine Benachrichtigungsvorrichtung zu aktivieren, wenn sich die eigene Fahrzeugposition einer ersten Steuerreferenzposition, die auf Basis des ersten Referenzpunktes (A) identifiziert wird, oder einer zweiten Steuerreferenzposition, die auf Basis des zweiten Referenzpunktes (B) identifiziert wird, nähert, wenn die automatische Fahrt durchgeführt wird, **gekennzeichnet dadurch, dass** die Steuereinheit (60) dazu konfiguriert ist, eine aus der ersten Steuerreferenzposition und der zweiten Steuerreferenzposition auf eine dritte Steuerreferenzposition zu ändern, die auf Basis eines dritten Referenzpunktes, der sich von dem ersten Referenzpunkt (A) und dem zweiten Referenzpunkt (B) unterscheidet, identifiziert wird, und
die Benachrichtigungsvorrichtung nach der Änderung auf Basis der dritten Steuerreferenzposition anstelle einer aus der ersten Steuerreferenzposition und der zweiten Steuerreferenzposition aktiviert wird.

2. Arbeitsfahrzeug (1) nach Anspruch 1, wobei die Steuereinheit (60) fähig ist, sowohl wenn die automatische Fahrt durchgeführt wird als auch wenn die automatische Fahrt nicht durchgeführt wird, eine aus der ersten Steuerreferenzposition und der zweiten Steuerreferenzposition auf die dritte Steuerreferenzposition zu ändern.

3. Arbeitsfahrzeug (1) nach Anspruch 1 oder 2, wobei die Steuereinheit (60) dazu konfiguriert ist, eine aus der ersten Steuerreferenzposition und der zweiten Steuerreferenzposition, die sich auf der Rückseite einer Arbeitsrichtung befindet, auf die dritte Steuerreferenzposition zu ändern, wenn der dritte Referenzpunkt in einem Arbeitsbereich (73) festgelegt ist, der auf der Basis des ersten Referenzpunktes (A) und des zweiten Referenzpunktes (B) definiert ist, während die automatische Fahrt durchgeführt wird.

4. Arbeitsfahrzeug (1) nach einem der Ansprüche 1 bis 3, wobei die Steuereinheit (60) dazu konfiguriert ist, eine Arbeitsrichtung zu identifizieren, wenn die automatische Fahrt gestartet ist, und eine aus der ersten Steuerreferenzposition und der zweiten Steuerreferenzposition, die sich auf der Rückseite der Arbeitsrichtung befindet, auf die dritte Steuerreferenzposition ändert, wenn der dritte Referenzpunkt in einem Arbeitsbereich festgelegt ist, der auf der Basis des ersten Referenzpunktes (A) und des zweiten Referenzpunktes (B) definiert ist, während die automatische Fahrt nicht durchgeführt wird.

5. Arbeitsfahrzeug (1) nach einem der Ansprüche 1 bis 4, wobei die Steuereinheit (60) dazu konfiguriert ist, eine aus der ersten Steuerreferenzposition und der zweiten Steuerreferenzposition, die näher an der eigenen Fahrzeugposition ist, auf die dritte Steuerreferenzposition zu ändern, wenn der dritte Referenzpunkt außerhalb eines Arbeitsbereichs (73) festgelegt ist, der auf der Basis des ersten Referenzpunktes (A) und des zweiten Referenzpunktes (B) definiert ist.

## Revendications

1. Véhicule de travail (1) pouvant se déplacer automatiquement le long d'un itinéraire de déplacement déterminé en parallèle d'un itinéraire de référence généré sur la base d'un premier point de référence et d'un deuxième point de référence déterminés à l'avance, tout en identifiant sa propre position du véhicule à l'aide d'un système de positionnement par satellite, comprenant :
une unité de commande (60) configurée pour activer un dispositif de notification, si la propre position du véhicule approche d'une première position de référence de commande identifiée sur la base du premier point de référence (A) ou d'une deuxième position de référence de commande identifiée sur la base du deuxième point de référence (B) lorsque le déplacement automatique est en cours d'exécution, **caractérisé en ce que** l'unité de commande (60) est configurée pour changer soit la première position de référence de commande, soit la deuxième position de référence de commande, en une troisième position de référence de commande identifiée sur la base d'un troisième point de référence qui est différent du premier point de référence (A) et du deuxième point de référence (B), et
après le changement, le dispositif de notification est activé sur la base de la troisième position de référence de commande au lieu de soit la première position de référence de commande, soit la deuxième position de référence de commande.

2. Véhicule de travail (1) selon la revendication 1, dans lequel l'unité de commande (60) peut changer soit la première position de référence de commande, soit la deuxième position de référence de commande, en troisième position de référence de commande, à la fois lorsque le déplacement automatique est en cours d'exécution et lorsque le déplacement automatique n'est pas en cours d'exécution.

3. Véhicule de travail (1) selon la revendication 1 ou 2, dans lequel l'unité de commande (60) est configurée pour changer soit la première position de référence de commande, soit la deuxième position de référence de commande, qui se trouve sur un côté arrière d'une direction de travail, en troisième position de référence de commande lorsque le troisième point de référence est déterminé dans une zone de travail (73) définie sur la base du premier point de référence (A) et du deuxième point de référence (B) pendant que le déplacement automatique est en cours d'exécution.

4. Véhicule de travail (1) selon l'une des revendications 1 à 3, dans lequel l'unité de commande (60) est configurée pour identifier une direction de travail lorsque le déplacement automatique est lancé et change soit la première position de référence de commande, soit la deuxième position de référence de commande, qui se trouve sur un côté arrière d'une direction de travail, en troisième position de référence de commande lorsque le troisième point de référence est déterminé dans une zone de travail définie sur la base du premier point de référence (A) et du deuxième point de référence (B) pendant que le déplacement automatique n'est pas en cours d'exécution.

5. Véhicule de travail (1) selon l'une des revendications 1 à 4, dans lequel l'unité de commande (60) est configurée pour changer soit la première position de référence de commande, soit la deuxième position de référence de commande, qui se trouve plus proche de la propre position du véhicule, en troisième position de référence de commande, lorsque le troisième point de référence est déterminé en dehors d'une zone de travail (73) définie sur la base du premier point de référence (A) et du deuxième point de référence (B).
